# EUROPÄISCHE PATENTSCHRIFT

(11) **EP 1 646 548 B1**
(45) Veröffentlichungstag und Bekanntmachung des Hinweises auf die Patenterteilung: **09.01.2008**
(21) Anmeldenummer: 04741589.8
(22) Anmeldetag: 18.05.2004
(51) Int. Cl.: B62D 15/00, B62D 15/02, B62D 1/06

(54) **FAHRHILFSVORRICHTUNG INSBESONDERE ZUM EINPARKEN EINES FAHRZEUGS**
DRIVER-ASSIST DEVICE, IN PARTICULAR, FOR PARKING A VEHICLE
DISPOSITIF D'AIDE A LA CONDUITE, NOTAMMENT D'AIDE AU STATIONNEMENT

(30) Priorität: 10.07.2003 DE 10331235
(43) Veröffentlichungstag der Anmeldung: 19.04.2006
(73) Patentinhaber: ROBERT BOSCH GMBH, 70442 Stuttgart (DE)
(72) Erfinder: LEE, Wei-Cha, 71229 Leonberg (DE); BOLLENGIER, Cyrille, 70469 Stuttgart (DE)
(86) Internationale Anmeldenummer: PCT/EP2004/050836
(87) Internationale Veröffentlichungsnummer: WO 2005/005232

(56) Entgegenhaltungen:
- DE-A- 10 015 897
- DE-U- 20 212 398
- PATENT ABSTRACTS OF JAPAN Bd. 1996, Nr. 05, 31. Mai 1996 (1996-05-31) & JP 08 002357 A (NISSAN MOTOR CO LTD), 9. Januar 1996 (1996-01-09)

## Beschreibung

### Stand der Technik

Die Erfindung geht aus von einer Fahrhilfsvorrichtung nach der Gattung des Hauptanspruchs. Aus der DE 199 25 584 A1 ist bereits ein Verfahren zur Fahrwegvisualisierung und eine zugehörige Vorrichtung bekannt, bei dem ein von einem eingeschlagenen Lenkwinkel abhängiger, zu erwartender Fahrweg eines Fahrzeugs in einer Anzeige dargestellt wird. Hierbei wird in der Anzeige zumindest ein Teil des rückwärtigen Fahrraums des Fahrzeugs angezeigt. Zudem wird in der Anzeige ein mit dem Fahrzeug maximal erreichbarer Bereich dargestellt, der bei einem vorgesehenen maximalen Lenkradeinschlag des Fahrzeugs in beide Richtungen jeweils erreicht werden kann. Hierdurch kann sich ein Fahrer darüber informieren, ob er in eine in der Anzeige erkennbare Parklücke mit einem Maximaleinschlag des Lenkrads noch hereinfahren kann. Eine Führung des Fahrers erfolgt nicht. Ferner sind Einparkhilfesysteme bekannt, die mittels Ultraschallsensoren den Abstand zu Hindernissen messen und den Fahrer akustisch und/oder optisch, z.B. mit Hilfe einer Balkenanzeige, vor Hindernissen in der Nähe des Fahrzeugs warnen. Ferner ist es bekannt, einen von dem Fahrer zu wählenden Fahrweg in einer Anzeige mittels Hilfslinien einzublenden. Im praktischen Fahrbetrieb wird ein Fahrer versuchen, diesen Hilfslinien möglichst getreu zu folgen. Hierdurch wird er möglicherweise zu einem genaueren und damit langsameren Fahren angehalten, als es die tatsächlichen Platzverhältnisse erfordern. Insbesondere kann es je nach einem berechneten Fahrweg dabei auch erforderlich sein, das Lenkrad entsprechend voll einzuschlagen, obwohl die tatsächlichen Platzverhältnisse einen vollen Lenkradeinschlag nicht erfordern. Dies kann insbesondere an engen Stellen oder bei entgegengesetzt fließendem Verkehr kritisch sein, da z.B. durch den Volleinschlag die Fahrzeugfrontseite auf eine benachbarte Fahrspur ragen könnte. Gegebenenfalls kann hierbei auch vom Fahrer verlangt werden, die Lenkung im Stillstand zu betätigen, um einen vorgegebenen Einschlagswinkel zu erreichen. Hierdurch kann sich der Reifenabrieb erhöhen.

Aus der DE 100 15 897 A1 ist ein Einparkhilfegerät bekannt, das die Merkmale aus dem Oberbegriff aus Anspruch 1 zeigt, bei dem dem Fahrer beispielsweise durch eine Fahrspurdarstellung ein berechneter Fahrweg zum Einparken in eine Parklücke dargestellt wird, die in ein Bild einer rückwärtigen Kamera des Fahrzeugs eingeblendet wird.

### Vorteile der Erfindung

Die erfindungsgemäße Fahrhilfsvorrichtung mit den Merkmalen des Hauptanspruchs hat demgegenüber den Vorteil, dass statt einer einzigen Soll-Trajektorie, der ein Fahrer folgen soll, zwei Grenzbahnen berechnet werden, zwischen denen der Fahrer geführt wird. Die Grenzbahnen werden von Trajektorien beschrieben, die einen Toleranzbereich umfassen, den der Fahrer einhalten muss, um erfolgreich einzuparken. Solange sich der Fahrer in diesem Bereich bewegt, kann er beliebig fahren und lenken und damit eine beliebige, zwischen den beiden begrenzenden Trajektorien liegende Trajektorie auswählen, ohne dass er mit einem Hindernis kollidiert. Um in einem gesicherten Bereich zu bleiben, darf der Fahrer jedoch den durch die Trajektorien begrenzten Bereich nicht verlassen. Bevorzugt sind die Trajektorien so gewählt, dass sie nur unter zumindest zeitweisem Maximaleinschlag des Lenkrads erreicht werden können. Gegebenenfalls kann auf eine dann unnötige Ausgabe von Wamhinweisen verzichtet werden, solange sich der Fahrer in dem durch die Trajektorien begrenzten Bereich befindet, bei dem kein Kollisionsrisiko des Fahrzeugs mit Hindernissen besteht. Somit kann sich der Fahrer insgesamt mehr auf das sonstige Fahrgeschehen konzentrieren. Der Fahrer wird hierbei nicht mehr gezwungen, einer schmalen Ideallinie zu folgen. Auch Volleinschläge des Lenkrads können verntieden werden, sofern die Platzverhältnisse dies zulassen.

Durch die in den Unteransprüchen aufgeführten Maßnahmen sind vorteilhafte Weiterbildungen und Verbesserungen der im Hauptanspruch angegebenen Fahrhilfsvorrichtung möglich. Besonders vorteilhaft ist, eine Anzeige zur Darstellung einer Umgebung des Fahrzeugs und zur Darstellung des berechneten Fahrbereichs in Bezug auf die dargestellte Umgebung des Fahrzeugs vorzunehmen. Hierdurch kann ein Fahrer die Umgebung des Fahrzeugs unmittelbar in Bezug zu dem erlaubten, durch die begrenzenden Trajektorien dargestellten Fahrbereich erfassen.

Ferner ist es vorteilhaft, auch einen erwarteten Fahrweg des Fahrzeugs in der Anzeige darzustellen, so dass es dem Fahrer möglich ist, den erwarteten Fahrweg des Fahrzeugs mit dem angezeigten Fahrbereich zu vergleichen.

Es ist ferner vorteilhaft, die Trajektorien, die den Fahrbereich begrenzen, jeweils so zu wählen, dass sie bei dem Fahrvorgang, insbesondere bei einem Einparkvorgang, einen oder gegebenenfalls auch zwei Vollausschläge der Lenkung erfordern. Dies bedeutet, dass ein maximaler Einschlagswinkel des Fahrzeugs auf dem Weg in die Parklücke bei einer Benutzung dieser Trajektorie erreicht wird. Diese Trajektorien definieren damit einen durch den jeweils maximalen Einschlagswinkel des Fahrzeugs vorgegebenen Fahrbereich.

Ferner ist es vorteilhaft, einen Hinweis an den Fahrer auszugeben, inwiefern er das Lenkrad einzuschlagen hat, um gegebenenfalls auf einem besseren Kurs in die Parklücke hineinzufahren. Durch diesen Hinweis wird es dem Fahrer abgenommen, selbst einen Vergleich zwischen seinem Fahrweg und dem angezeigten Fahrbereich vorzunehmen und gegebenenfalls aus diesem Vergleich Korrekturen abzuleiten.

Es ist ferner vorteilhaft, dem Fahrer eine haptische Ausgabe in Form einer motorischen Einwirkung auf das Lenkrad zu geben, um ihn auf ein Verlassen des Fahrbereichs hinzuweisen. Hierdurch kann der Fahrer fühlbar und damit unmittelbar vor einer möglichen Kollision gewarnt werden.

### Zeichnung

Ausführungsbeispiele der Erfindung sind in der Zeichnung dargestellt und in der nachfolgenden Beschreibung näher erläutert.

Es zeigen
Figur 1 eine erfindungsgemäße Fahrhilfsvorrichtung in einem Kraftfahrzeug,
Figur 2 eine Aufsicht auf ein Fahrzeug mit einer erfindungsgemäßen Fahrhilfsvorrichtung bei einem Einparkvorgang,
Figur 3 eine Anzeigendarstellung einer erfindungsgemäßen Fahrhilfsvorrichtung mit einer Anzeige des berechneten Fahrbereichs.

### Beschreibung des Ausführungsbeispiels

Die erfindungsgemäße Fahrhilfsvorrichtung wird insbesondere für Einparkvorgänge bei Kraftfahrzeugen verwendet. Jedoch kann sie auch in beliebigen anderen Fahrzeugen verwendet werden. Die Verwendung ist dabei nicht auf Einparkvorgänge begrenzt, sondern sie kann in beliebigen anderen, insbesondere anspruchsvollen Fahrsituationen verwendet werden, die ein vergleichbar genaues Führen des Fahrzeugs erfordern. Eine solche Verwendung kann z.B. die Führung des Fahrzeugs durch eine Engstelle des Fahrwegs sein.

Die Vorrichtung kann zur Unterstützung eines Einparkvorgangs sowohl zum Einparken in Fahrtrichtung parallel, schräg oder rechtwinklig zur Fahrtrichtung, als auch für ein rückwärtiges Einparken verwendet werden. Insbesondere ist ihre Verwendung bei einem rückwärtigen Einparken vorteilhaft, da hierbei im Allgemeinen die Sichtverhältnisse für einen Fahrer schlecht sind, so dass ein Wunsch eines Fahrers besonders hoch ist, eine Unterstützung bei einem Einparkvorgang zu erhalten. Im Folgenden wird die erfindungsgemäße Fahrhilfsvorrichtung am Beispiel eines rückwärtigen Einparkvorgangs in eine seitlich am Straßenrand parallel zu einem Straßenverlauf befindliche Parklücke erläutert. Die erfindungsgemäße Fahrhilfsvorrichtung ist dabei als eine Einparkvorrichtung zur Unterstützung des Einparkens des Fahrzeugs in die Parklücke ausgeführt.

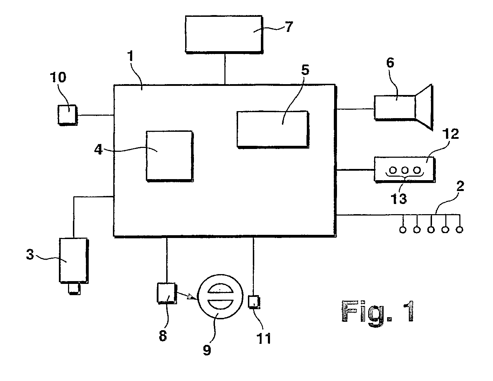

In der Figur 1 ist eine Einparkvorrichtung 1 dargestellt, die in ein Fahrzeug eingebaut ist. Die Einparkvorrichtung 1 weist Abstandssensoren 2 auf, die sowohl an den Fahrzeugvorderseiten und Fahrzeugrückseiten, als auch an den Seitenflächen des Fahrzeugs montiert sind und die den Abstand des Fahrzeugs zu Hindernissen in der Fahrzeugumgebung messen. Die Abstandssensoren 2 sind z.B. als Ultraschallsensoren ausgeführt und dienen einer Abstandsbestimmung über eine Laufzeitmessung eines von einem Hindernis reflektierten Ultraschallsignals. Ferner können auch optische Abstandssensoren, z.B. Radarsensoren zur Abstandsmessung, verwendet werden.

Von den Abstandssensoren 2 ermittelte Abstandsinformationen werden von einer Recheneinheit 4 verarbeitet. Hierbei berücksichtigt die Recheneinheit 4 in einem Speicher 5 abgelegte Fahrzeugdaten. Die Fahrzeugdaten geben unter anderem das Positionsverhältnis der Abstandssensoren 2 gegenüber der Fahrzeugaußenkontur an. In Abhängigkeit von den gemessenen Abstandswerten wird so unter Berücksichtigung der Fahrzeugdaten der Abstand des Fahrzeugs zu Hindernissen in der Umgebung des Fahrzeugs bestimmt. Wird ein vorgegebener Abstand unterschritten, so wird eine akustische Warnung über einen Lautsprecher 6 und/oder eine optische Warnung über eine Anzeige 7 an den Fahrer ausgegeben. In einer weiteren Ausführungsform kann eine motorische Einheit 8 auf ein Lenkrad 9 des Kraftfahrzeugs so einwirken, dass ein Fahrer auch eine haptische Rückmeldung erhält. Über eine Kamera 3 kann ein Bereich der Fahrzeugumgebung, z.B. ein Rückraum des Fahrzeugs, überwacht und gegebenenfalls dem Fahrer in der Anzeige 7 dargestellt werden.

Die Einparkvorrichtung 1 ist dabei erfindungsgemäß dazu ausgeführt, Trajektorien zum Einparken ausgehend von einer aktuellen Fahrzeugposition zu einer Parkposition in Abhängigkeit von den über die Abstandssensoren 2 ermittelten Umgebungsdaten zu berechnen. Hierbei werden insbesondere die aktuelle Fahrzeugposition, die Position von Hindernissen, die Fahrzeugabmaße - auch der Ausschlag z.B. des Hecks bei einem Einschlagen - und der aktuelle, sowie der maximale Lenkwinkel berücksichtigt. Es werden dabei Trajektorien des Fahrzeugs ermittelt, bei denen es zu keiner Kollision mit Hindernissen kommt. Zum Ausgleich der Messunsicherheit und einer Unsicherheit bei der Steuerung des Fahrzeugs wird hierbei vorzugsweise ein Mindestabstand zu den Hindernissen eingehalten, der bei der Berechnung berücksichtigt wird. Dieser Mindestabstand beträgt zwischen 10 cm und 35 cm, in einer bevorzugten Ausführungsform 25 cm.

Zur Bestimmung der Fahrzeugposition ist vorzugsweise ein Wegstreckensensor 10 vorgesehen, der eine Fahrbewegung des Fahrzeugs ermitteln kann. Um einen eingeschlagenen Lenkwinkel zu bestimmen ist ein Lenkwinkelsensor 11 vorgesehen, der eine Drehbewegung des Lenkrads 9 überwacht. Eine Steuerung der Einparkvorrichtung 1 erfolgt über eine Bedieneinheit 12, die mit Tasten 13 versehen ist. Insbesondere kann über die Bedieneinheit 12 eine Aktivierung der Einparkvorrichtung 1 erfolgen. Ferner ist es auch möglich, eine gewünschte Einparkform auszuwählen, z.B. Einparken parallel oder senkrecht zum Straßenverlauf, bzw. Parameter der Einparkvorrichtung 1, so z.B. die Fahrzeugdaten, zu ändern. Die Einparkvorrichtung 1 ist vorzugsweise an einer im Fahrzeug verdeckten Stelle montiert. Die Anzeige 7 dagegen befindet sich z.B. in der Mittelkonsole des Fahrzeugs oder in einem Anzeigeinstrument vor dem Fahrer. Für eine akustische Ausgabe kann z.B. ein Lautsprecher 6 eines Radios im Fahrzeug verwendet werden.

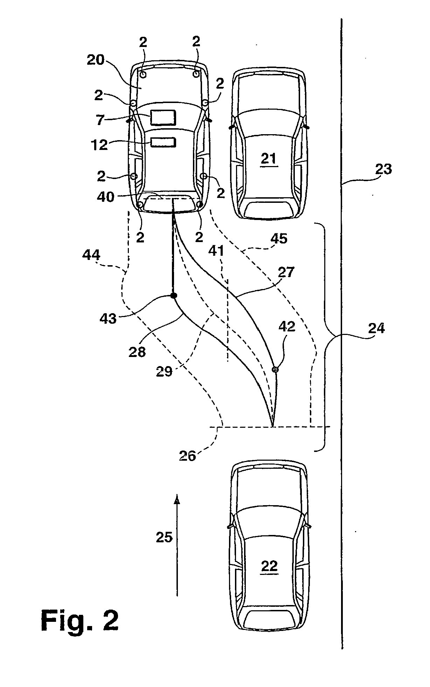

In der Figur 2 ist eine Einparksituation eines Kraftfahrzeugs 20 mit erfmdungsgemäß berechneten Trajektorien zur Führung des Fahrzeugs in die Parklücke dargestellt. Das Fahrzeug 20 soll zwischen einem ersten Fahrzeug 21 und einem zweiten Fahrzeug 22 rückwärts eingeparkt werden. Die Fahrzeuge 21, 22 sind beide in Längsrichtung an einem Straßenrand 23 abgestellt. Zwischen dem ersten Fahrzeug 21 und dem zweiten Fahrzeug 22 besteht ein Abstand. Der Abstand bildet eine Parklücke 24 zwischen den beiden Fahrzeugen 21, 22, die zum Einparken des Fahrzeugs 20 ausreichend groß ist. Das Fahrzeug 20 ist zuvor in Pfeilrichtung 25 zunächst an dem zweiten Fahrzeug 22 vorbeigefahren, wobei die an der dem Straßenrand 23 zuweisenden Fahrzeugseite angeordneten Abstandssensoren 2 die Parklücke 24 insbesondere hinsichtlich ihrer Länge und bevorzugt auch hinsichtlich ihrer Breite vermessen haben. Aus diesen Daten sowie aus den ebenfalls erfassten Positionen der Fahrzeuge 21, 22 wird von der Recheneinheit 4 berechnet, wie das Fahrzeug 20 in die Parklücke 24 hereinfahren kann. Hierzu gibt es ausgehend von der in der Figur 2 dargestellten Position des Fahrzeugs 20 mehrere Möglichkeiten einer Fahrstrecke, um eine Endposition 26 für ein Rückwärtsfahren in die Parklücke 24 zu erreichen, wobei es gegebenenfalls im Anschluss noch erforderlich sein kann, das Fahrzeug 20 ausgehend von der Endposition 26 wieder ein Stück nach vorne zu steuern. Denn im Allgemeinen wird eine Parklücke derart viel Platz bieten, dass nicht nur eine einzige Fahrstrecke von der aktuellen Fahrzeugposition kollisionsfrei unter Einhaltung eines Mindestabstands zu Hindernissen zu einer geeigneten Parkposition führt.

In der Figur 2 sind eine erste extreme Trajektorie 27 und eine zweite extreme Trajektorie 28 dargestellt. Eine Trajektorie soll eine Fahrstrecke des Fahrzeugs kennzeichnen, die in der hier beschriebenen Ausführungsform durch den Weg beschrieben ist, den der Mittelpunkt der Hinterachse des Fahrzeugs bei einer Fahrt entlang der Trajektorie entlanggeführt wird. Die Hinterachse 40 des Fahrzeugs 20 ist in der Figur 2 gestrichelt dargestellt. Neben dieser Definition einer Trajektorie kann eine Fahrstrecke des Fahrzeugs auch über andere, fixen Punkten des Fahrzeugs definiert werden, z.B. an den Ecken der Fahrzeugkontur oder an der Position der Räder.

Bei der Berechung der beiden Trajektorien 27, 28, die somit zwei unterschiedliche Fahrstrecken bezeichnen, sind die Fahrzeugabmessungen zu beachten. Insbesondere ist zu beachten, dass das Fahrzeug gegebenenfalls ausschlägt bzw. über die Breite der Räder an den Seiten z.B. mit Spiegeln hinausragt. Die Trajektorien können also nur in der Weise gewählt werden, dass unter Berücksichtigung dieser Randbereiche keine Kollision des Fahrzeugs mit Hindernissen neben dem Fahrzeug erfolgen kann.

Bei der ersten Trajektorie 27 wird eine Lenkung des Fahrzeugs 20 in Richtung der Parklücke zunächst voll eingeschlagen. Nach einer gewissen Fahrstrecke ist das Umlenken in die andere Richtung mit Volleinschlag erforderlich. Der Umlenkbereich ist durch eine gestrichelte Linie 41 dargestellt, die auch die zweite Trajektorie 28 schneidet. Ist das Fahrzeug hinreichend in die Parklücke 24 hineingefahren, muss der Fahrer ab einem Punkt 42 einfach geradeaus zurückfahren, bis die Endposition 26 erreicht ist.

Die zweite Trajektorie 28 ist so geführt, dass zunächst das Fahrzeug bei einer Führung entlang der zweiten Trajektorie 28 bis zu einem Punkt 43 geradeaus zurückfährt. Hier wird in Richtung der Parklücke 24 voll eingeschlagen. Bei Erreichen des Umlenkbereichs (gestrichelte Linie 41) wird in die Gegenrichtung voll eingeschlagen.

Beide Trajektorien 27, 28 ermöglichen ein kollisionsfreies Einparken. Dies wird durch gestrichelte Linien 44, 45 deutlich, die einen von dem Fahrzeug bei der Fahrt eingenommenen Bereich begrenzen, der seitlich von dem Fahrzeug 20 bei einem Befahren beider Trajektorien insgesamt nicht überschritten wird. Die gestrichelten Linien verlaufen werden auf den Straßenrand, noch unterschreiten sie einen vorzugsweise vorgegebenen Sicherheitsabstand zu den Fahrzeugen 21, 22. Beide Trajektorien beschrieben extreme, unterschiedliche Fahrstrecken: Bei der zweiten Trajektorie kann nach dem Punkt 43 nicht mehr schwächer eingeschlagen werden, bei der ersten Trajektorie kann vor dem Punkt 42 nicht mehr schwächer gegengelenkt werden. Es kann jedoch von dem Fahrer jede beliebige Trajektorie zum Einparken gewählt werden, die zwischen der ersten und der zweiten Trajektorie 27, 28 liegt, um zu der eingezeichneten Endposition 26 des Fahrzeugs zu gelangen. Eine Ideallinie 29 ist gestrichelt hervorgehoben, bei der sowohl in die erste Lenkrichtung, als auch in die Gegenlenkrichtung kein voller Lenkradeinschlag erforderlich ist und die zu beiden begrenzenden Trajektorien 27, 28 jeweils einen maximalen Abstand aufweist. Da jede der von den Trajektorien 27, 28 eingeschlossenen Trajektorien zu einem Einparken des Fahrzeugs 20 in die Parklücke 24 führt, ist es jedoch nicht erforderlich, dass der Fahrer unbedingt der Ideallinie 29 folgt. Dies stellt vielmehr eine Konzentrations- und Fahrleistung des Fahrers dar, die den Fahrer unnötig beansprucht. Es reicht vielmehr aus sicherzustellen, dass der Fahrer sich mit seinem Fahrzeug innerhalb der begrenzenden Trajektorien 27, 28 bewegt.

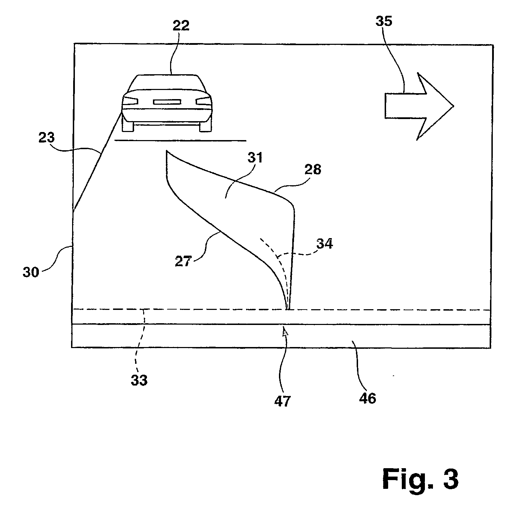

Erfindungsgemäß wird nun in einer ersten Ausführungsform in der Anzeige 7 dem Fahrer ein Bereich angezeigt, der sich zwischen den beiden extremen Trajektorien 27 und 28 befindet. Eine solche Anzeige ist im Folgenden anhand der Figur 3 erläutert. Es ist nun für den Fahrer ausreichend, sich mit dem Fahrzeug in dem von den Trajektorien 27, 28 eingegrenzten Bereich zu bewegen, d.h. das Fahrzeug so zu steuern, dass es sich mit der Mitte der Hinterachse in diesem eingegrenzten Bereich bewegt.

Da der Fahrer nicht mehr der Ideallinie 29 folgen muss, sondern sich in dem gesamten und damit breiteren Bereich bewegen kann, kann das Einparken gegenüber einem Folgen der Ideallinie 29 mit einer höheren Geschwindigkeit erfolgen. Da jedoch auch die Trajektorien 27, 28 mit einer Annäherung an die Endposition 26 des Einparkvorgangs aufeinander zulaufen, kann es jedoch erforderlich sein, mit zunehmender Annäherung an die endgültige Parkposition, die Geschwindigkeit des Fahrzeugs zu verringern, um sich in dem schmaler werdenden Bereich orientieren zu können. In der Anzeige 7 kann hierzu eine entsprechende Warnung an den Fahrer ausgegeben werden.

In einem weiteren Ausführungsbeispiel ist es auch möglich, dass eine Ausgabe von Hinweisen an den Fahrer des Fahrzeugs nur solange erfolgt, bis ein maximaler Schiefstand zwischen dem Fahrzeug und der Position des Fahrzeugs in der Parklücke erreicht ist. Der Winkel zwischen der Längsachse des Fahrzeugs 20 und den geparkten Fahrzeugen 21, 22 wird als ein sogenannter Gierwinkel bezeichnet. Eine Fahrzeugführung erfolgt also nur, bis der maximale Gierwinkel erreicht ist. Im Folgenden ist es lediglich die Aufgabe des Fahrers, diesen Gierwinkel auf 0 zu reduzieren und das Fahrzeug in die Parkposition zu bringen. Gegebenenfalls kann eine entsprechende Unterstützung für den Fahrer in Form eines eingeblendeten Fahrbereichs bei der Reduktion entfallen, da er diese Reduktion gegebenenfalls auch selbst vornehmen kann.

In der Figur 3 ist ein Ausführungsbeispiel für eine Anzeigendarstellung 30 in der Anzeige 7 gezeigt. Zum Beispiel kann von einer in der Figur 2 nicht gezeigten Kameravorrichtung ein Bild des rückwärtigen Fahrraums des Fahrzeugs 20 aufgenommen werden. Anstelle einer Ermittlung der Fahrzeugumgebung über die Kameravorrichtung ist es auch möglich, über die Auswertung der Abstandssensoren 2 rechnerisch eine Umgebungskarte des Fahrzeugs 20 zu erstellen. Eine berechnete Anzeigendarstellung kann dann entsprechend der Darstellung gemäß der Figur 2 auch in Aufsicht erfolgen.

In der Anzeigendarstellung 30 ist das zweite Fahrzeug 22 und der Straßenrand 23 bildlich in dem von der Kamera 3 aufgenommenen Bild dargestellt. Ferner ist ein Fahrbereich 31 gezeigt, der von den beiden Trajektorien 27, 28 begrenzt ist. Die Trajektorien 27, 28 werden hierzu rechnerisch auf den Fahrweg in die Parklücke, also auf die Straßenoberfläche, projiziert und in die Anzeigendarstellung 30 eingeblendet.

Um in die Parklücke 24 hineinzufahren, muss ein Fahrer nun das Fahrzeug so führen, dass die Mitte der Hinterachse in dem Fahrbereich 31 geführt wird. In einer ersten Ausführungsform wird hierzu eine Fahrwegsmarkierung 34 in die Anzeigendarstellung eingeblendet. Die Fahrwegsmarkierung 34 gibt eine projektierte Fahrlinie anzeigt, die von der aktuellen Lenkwinkelstellung abhängig ist. Die Fahrwegsmarkierung 34 beschreibt dabei den Weg der Mitte der Hinterachse, die diese bei einer Rückwärtsfahrt bei unveränderter Lenkwinkelstellung einnimmt. Hierbei wird eine aktuelle Lenkwinkelstellung über den Lenkwinkelsensor 11 ermittelt. Die Fahrwegsmarkierung 34 wird für eine bestimmte Entfernung, z.B. für eine Strecke von 2m ausgehend von einer jeweils aktuellen Fahrzeugposition angezeigt. Der Fahrer kann nun durch den Vergleich der Fahrwegsmarkierung 34 mit den Trajektorien 27, 28 erkennen, ob und wann ein Lenkeingriff durch ihn gegebenenfalls erforderlich ist. Liegt die Fahrwegsmarkierung 34 innerhalb des Fahrbereichs 31 kann der Fahrer ohne ein Kollisionsrisiko in die Parklücke fahren, ohne dass eine Lenkwinkelkorrekturvomehmen muss.

In einer weiteren Ausführungsform kann auch eine Mittelmarkierung 47 vorgesehen sein, die die Mitte des Fahrzeugs in der Anzeigendarstellung 30 kennzeichnet. Um dem Betrachter eine bessere Orientierung zu geben, wird bevorzugt zumindest ein Außenrand des Stoßfängers des Fahrzeugs 20 mit in die Anzeigendarstellung 30 eingeblendet.

In einer bevorzugten Ausführungsform ist eine Haltemarkierung 32 dargestellt, die dem Fahrer anzeigt, an welcher Stelle er vor dem zweiten Fahrzeug 22 anhalten muss. In einer weiteren bevorzugten Ausführung ist es auch vorgesehen, eine Startmarkierung 33 einzublenden, bis zu der ein Fahrer gerade parallel zu dem ersten Fahrzeug 21 zurücksetzen muss, um erst anschließend mit einem Einschlagen zum Einparken in die Parklücke zu beginnen. In einer in der Figur 3 nicht dargestellten Ausführungsform kann auch die Ideallinie 29 in den Fahrbereich 31 zur zusätzlichen Orientierung eingeblendet werden.

Ist ein Gegenlenken durch den Fahrer erforderlich oder angeraten, so kann in einer besonderen Ausführungsform in der Anzeigendarstellung 30 z.B. durch die Anzeige eines entsprechenden Pfeilsymbols auf einen Wechsel der Lenkradeinschlagrichtung gesondert hingewiesen werden. In der Anzeigendarstellung 30 wird zur Unterstützung des Fahrers hierzu beispielsweise ein Pfeil 35 eingeblendet, der einem Fahrer die Lenkrichtung anzeigt, in der er eine Korrektur erfolgen soll. Im vorliegenden Beispiel soll der Fahrer das Lenkrad 9 also nach rechts drehen.

Anstelle oder ergänzend zu der beschriebenen optischen Anzeige können Fahrhinweise auch über eine akustische und/oder haptische Ausgabe an den Fahrer ausgegeben werden. Bei einer haptischen Ausgabe ist das Lenkrad leicht drehbar, solange sich das Fahrzeug innerhalb des Fahrbereichs 31 bewegt. Droht das Fahrzeug den Fahrbereich 31 zu verlassen und also die Trajektorien 27, 28 zu überschreiten, so wird entweder das Lenkrad 9 in Vibration versetzt und/oder ein Lenken in eine hierfür kritische Fahrtrichtung wird erschwert.

In einer anderen Ausführungsform kann auch eine Ausgabe akustisch erfolgen, so dass ein Fahrer z.B. durch einen Signalton darauf hingewiesen wird, wenn er den Fahrbereich 31 verlässt. Wird kein Signal ausgegeben, bedeutet dies, dass er sich innerhalb des Fahrbereichs 31 bewegt, der zuvor berechnet wurde.

Durch die Überwachung des zurückgelegten Fahrwegs mit dem Wegstreckensensor 10 und dem Lenkwinkelsensor 11 wird durch die Recheneinheit 4 verfolgt, inwieweit das Fahrzeug 20 dem vorgeschlagenen Fahrbereich 31 folgt. Gegebenenfalls erfolgt in Abhängigkeit von der Position des Fahrzeugs bzw. von geänderten Abständen zu den Hindemissen eine dynamische Anpassung der Trajektorien 27, 28 und damit des Fahrbereichs 31.

## Patentansprüche

1. Fahrhilfsvorrichtung zum Einparken eines Fahrzeugs mit einer Ausgabeeinheit zur Ausgabe von Fahrhinweisen an einen Fahrer, **dadurch gekennzeichnet, dass** dem Fahrer mit den Fahrhinweisen ein Fahrbereich (31) zwischen zwei Trajektorien (27, 28) angegeben wird, die zwei berechnete, unterschiedliche Fahrstrecken bezeichnen und die derart berechnet sind, dass das Fahrzeug (20) zum Einparken innerhalb des Fahrbereichs (31) bewegt werden kann.

2. Fahrhilfsvorrichtung nach Anspruch 1, **gekennzeichnet durch** eine Anzeige (7) zur Darstellung einer Umgebung (22, 23) des Fahrzeugs (20) und zur Darstellung des berechneten Fahrbereichs (31) in Bezug zu der dargestellten Umgebung (22, 23) des Fahrzeugs (20)

3. Fahrhilfsvorrichtung nach Anspruch 2, **gekennzeichnet durch** eine Erfassungseinheit (11) zur Erfassung eines eingestellten Lenkwinkels und zur Bestimmung eines erwarteten Fahrwegs (34) bei unverändertem Lenkwinkel, wobei der erwartete Fahrweg (34) in Bezug auf die Umgebung des Fahrzeugs (20) zumindest teilweise dargestellt wird.

4. Fahrhilfsvorrichtung nach einem der vorherigen Ansprüche, **dadurch gekennzeichnet, dass** die den Fahrbereich (31) begrenzenden Trajektorien (27, 28) jeweils mindestens einen Vollausschlag der Lenkung zum Folgen der jeweiligen Trajektorie erfordern.

5. Fahrhilfsvorrichtung nach einem der vorherigen Ansprüche, **gekennzeichnet durch** Messvorrichtungen (2) zur Messung eines Abstands des Fahrzeugs zu Hindernissen in der Umgebung des Fahrzeugs.

6. Fahrhilfsvorrichtung nach einem der vorherigen Ansprüche, **gekennzeichnet durch** eine Recheneinheit (4) zur Ermittlung einer für das Fahrzeug geeigneten Parklücke.

7. Fahrhilfsvorrichtung nach einem der vorherigen Ansprüche, **dadurch gekennzeichnet, dass** ein Hinweis (35) zum Wechseln der Drehrichtung eines Lenkrades (9) ausgegeben wird.

8. Fahrhilfsvorrichtung nach einem der vorherigen Ansprüche, **gekennzeichnet durch** eine motorische Einheit (8) zur Einwirkung auf ein Lenkrad (9) des Fahrzeugs (20) zur Ausgabe einer haptischen Rückwirkung bei einem Verlassen des Fahrbereichs (31) über das Lenkrad (9).

9. Fahrhilfsvorrichtung nach einem der vorherigen Ansprüche, **gekennzeichnet durch** einen Lautsprecher zur Ausgabe eines akustischen Warnsignals bei einem Verlassen des Fahrbereichs (31).

## Claims

1. Driving aid for parking a vehicle with an output unit for outputting driving instructions to a driver, **characterized in that** the driving instructions indicate to the driver a driving range (31) between two trajectories (27, 28) which designate two different calculated routes and which are calculated in such a way that the vehicle (20) can be moved in order to park it within the driving range (31).

2. Driving aid according to Claim 1, **characterized by** a display (7) for representing the surroundings (22, 23) of the vehicle (20) and for representing the calculated driving range (31) in relation to the represented surroundings (22, 23) of the vehicle (20).

3. Driving aid according to Claim 2, **characterized by** a sensing unit (11) for sensing a steering angle which has been set and for determining an anticipated driving path (34) with an unchanged steering angle, wherein the anticipated driving path (34) is at least partially represented in relation to the surroundings of the vehicle (20).

4. Driving aid according to one of the preceding claims, **characterized in that** the trajectories (27, 28) which bound the driving range (31) each require at least one full lock of the steering in order to follow the respective trajectory.

5. Driving aid according to one of the preceding claims, **characterized by** measuring devices (2) for measuring a distance of the vehicle from obstacles in the surroundings of the vehicle.

6. Driving aid according to one of the preceding claims, **characterized by** a computing unit (4) for determining a parking space which is suitable for the vehicle.

7. Driving aid according to one of the preceding claims, **characterized in that** an instruction (35) to change the direction of rotation of a steering wheel (9) is output.

8. Driving aid according to one of the preceding claims, **characterized by** a motor unit (8) for acting on a steering wheel (9) of the vehicle (20) in order to output a haptic reaction via the steering wheel (9) when the vehicle leaves the driving range (31).

9. Driving aid according to one of the preceding claims, **characterized by** a loudspeaker for outputting an audible warning signal when the vehicle leaves the driving range (31).

## Revendications

1. Dispositif d'assistance de conduite pour garer un véhicule, comportant une unité d'émission pour émettre des indications de conduite destinées à un conducteur,
**caractérisé en ce que**
le conducteur reçoit les indications de conduite concernant une plage de guidage (31) entre deux trajectoires (27, 28) qui caractérisent deux trajectoires calculées, différentes, ces trajectoires étant calculées pour que le véhicule (20) à ranger puisse se déplacer dans cette plage de guidage (31).

2. Dispositif d'assistance de conduite selon la revendication 1,
**caractérisé par**
un afficheur (7) représentant l'environnement (22, 23) du véhicule (20) et la plage de guidage (31) calculée par rapport à l'environnement représenté (22, 23) du véhicule (20).

3. Dispositif d'assistance de conduite selon la revendication 1,
**caractérisé par**
une unité de saisie (11) pour saisir un angle de braquage réglé et déterminer une trajectoire prévisible (34) si l'angle de braquage n'est pas modifié, la trajectoire prévisible (34) étant représentée au moins en partie par rapport à l'environnement du véhicule (20).

4. Dispositif d'assistance de conduite selon l'une des revendications précédentes,
**caractérisé en ce que**
les trajectoires (27, 28) délimitant la plage de guidage (31) nécessitent au moins un débattement maximum de la direction pour suivre les trajectoires respectives.

5. Dispositif d'assistance de conduite selon l'une des revendications précédentes,
**caractérisé par**
des installations de mesure (2) pour mesurer la distance entre le véhicule et les obstacles dans l'environnement du véhicule.

6. Dispositif d'assistance de conduite selon l'une des revendications précédentes,
**caractérisé par**
une unité de calcul (4) pour déterminer un intervalle de stationnement permettant de recevoir le véhicule.

7. Dispositif d'assistance de conduite selon l'une des revendications précédentes,
**caractérisé par**
l'émission d'une indication (35) pour changer de sens de rotation du volant (9).

8. Dispositif d'assistance de conduite selon l'une des revendications précédentes,
**caractérisé par**
une unité motorisée (8) pour agir sur un volant (9) du véhicule (20) pour émettre par l'intermédiaire du volant (9) une réaction haptique lorsqu'on quitte la plage de guidage (31).

9. Dispositif d'assistance de conduite selon l'une quelconque des revendications précédentes,
**caractérisé par**
un haut-parleur émettant un signal d'avertissement acoustique lorsqu'on quitte la plage de guidage (31).
